# FASCICULE DE BREVET EUROPEEN

(11) **EP 3 703 956 B1**
(45) Date de publication et mention de la délivrance du brevet: **08.12.2021**
(21) Numéro de dépôt: 18814990.0
(22) Date de dépôt: 30.10.2018
(51) Int. Cl.: B60C 1/00, C08K 3/10, C08K 3/105, C08K 3/11

(54) **PNEUMATIQUE POURVU D'UNE COUCHE INTERNE A BASE D'AU MOINS UN ELASTOMERE ISOPRENIQUE, UNE RESINE RENFORÇANTE ET UN SEL METALLIQUE**
REIFEN MIT INNERLINER AUF BASIS MINDESTENS EINES ISOPRENELASTOMERS, VERSTÄRKERHARZ UND METALLSALZ
TIRE WITH INNERLAYER BASED ON AT LEAST AN ISOPRENE ELASTOMER, REINFORCING RESIN AND METALLIC SALT

(30) Priorité: 30.10.2017 FR 1760203
(43) Date de publication de la demande: 09.09.2020
(73) Titulaire: Compagnie Générale des Etablissements Michelin, 63000 Clermont-Ferrand (FR)
(72) Inventeur: FRISCH, Auriane, 63040 Clermont-Ferrand Cedex 9 (FR); BARBOUTEAU, Joël, 63040 Clermont-Ferrand Cedex 9 (FR)
(74) Mandataire: Louret, Sylvain
(86) Numéro de dépôt international: PCT/FR2018/052687
(87) Numéro de publication internationale: WO 2019/086798

(56) Documents cités:
- WO-A1-2017/170654
- US-A1- 2006 094 831

## Description

La présente invention est relative à des pneumatiques, et plus particulièrement à ceux présentant au moins une couche interne présentant une rigidité élevée.

Les concepteurs de pneumatiques doivent respecter un cahier des charges strict qui fixe un grand nombre d'exigences techniques, souvent antinomiques. Les compositions de caoutchouc doivent notamment obéir à une exigence de rigidité suffisante tout en maintenant une bonne cohésion du mélange. L'amélioration combinée de ces propriétés reste une préoccupation constante chez les concepteurs, l'une se faisant généralement au détriment de l'autre.

Afin d'assurer une bonne rigidité, il est connu depuis de nombreuses années, d'utiliser des pneumatiques et des compositions de caoutchouc présentant des taux élevés de charges renforçantes. Toutefois, de manière connue, l'augmentation de la rigidité d'une composition de caoutchouc en augmentant le taux de charge peut pénaliser les propriétés d'hystérèse et donc de résistance au roulement des pneumatiques. Or, on cherche toujours à baisser la résistance au roulement des pneumatiques pour diminuer la consommation en carburant et ainsi préserver l'environnement.

Une forte rigidité peut également être obtenue en utilisant un système de vulcanisation dit concentré, c'est-à-dire comprenant notamment des taux de soufre et d'accélérateur de vulcanisation relativement élevés. Toutefois, un tel système de vulcanisation concentré pénalise le vieillissement de la composition.

Enfin, une rigidité élevée peut être obtenue en incorporant certaines résines renforçantes comme divulgué dans la demande WO 02/10269.

Ainsi, il existe un besoin de trouver des moyens d'améliorer l'endurance de pneumatiques comprenant des compositions à rigidité élevée, sans pénaliser la résistance au roulement.

Poursuivant ses recherches, la Demanderesse a découvert que l'utilisation d'un sel d'un métal alcalino-terreux, alcalin ou lanthanide dans une composition comprenant plus de 80 pce d'élastomère isoprénique et une résine renforçante permet d'améliorer l'endurance, en particulier par l'amélioration de la résistance à la propagation de fissure et de l'allongement rupture, sans pénaliser, voire en améliorant, la résistance au roulement.

Ainsi, la présente invention a notamment pour objet un pneumatique dont au moins une couche interne comporte une composition de caoutchouc à base d'au moins :
- 80 à 100 pce d'un élastomère isoprénique,
- une charge renforçante comprenant majoritairement du noir de carbone,
- 1 à 45 pce de résine renforçante,
- un sel d'un métal alcalino-terreux, alcalin ou lanthanide,
- un système de réticulation.

L'invention ainsi que ses avantages seront aisément compris à la lumière de la description et des exemples de réalisation qui suivent.

### I- DÉFINITIONS

Par l'expression "partie en poids pour cent parties en poids d'élastomère" (ou pce), il faut entendre au sens de la présente invention, la partie, en masse pour cent parties en masse d'élastomère ou de caoutchouc.

Dans la présente, sauf indication expresse différente, tous les pourcentages (%) indiqués sont des pourcentages (%) en masse.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b). Dans la présente, lorsqu'on désigne un intervalle de valeurs par l'expression "de a à b", on désigne également et préférentiellement l'intervalle représenté par l'expression "entre a et b".

Dans la présente, par l'expression composition "à base de", on entend une composition comportant le mélange et/ou le produit de réaction des différents constituants utilisés, certains de ces constituants de base étant susceptibles de, ou destinés à, réagir entre eux, au moins en partie, lors des différentes phases de fabrication de la composition, en particulier au cours de sa réticulation ou vulcanisation. A titre d'exemple, une composition à base d'une matrice élastomérique et de soufre comprend la matrice élastomérique et le soufre avant cuisson, alors qu'après cuisson le soufre n'est plus détectable car ce dernier a réagi avec la matrice élastomérique en formant des ponts soufrés (polysulfures, disulfures, mono-sulfure).

Lorsqu'on fait référence à un composé "majoritaire", on entend au sens de la présente invention, que ce composé est majoritaire parmi les composés du même type dans la composition, c'est-à-dire que c'est celui qui représente la plus grande quantité en masse parmi les composés du même type, par exemple plus de 50%, 60%, 70%, 80%, 90%, voire 100% en poids par rapport au poids total du type de composé. Ainsi, par exemple, une charge renforçante majoritaire est la charge renforçante représentant la plus grande masse par rapport à la masse totale des charges renforçantes dans la composition. Au contraire, un composé "minoritaire" est un composé qui ne représente pas la fraction massique la plus grande parmi les composés du même type, par exemple moins de 50%, 40%, 30%, 20%, 10%, voire moins.

Dans le cadre de l'invention, les produits carbonés mentionnés dans la description, peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges, etc.

Sauf indications contraires, les composants décrits dans la présente font partie de la composition de l'au moins une couche interne du pneumatique selon la présente invention. Leurs taux d'incorporation respectifs correspondent à leurs taux dans la composition de couche interne du pneumatique selon la présente invention. Ainsi, sauf indication contraire, lorsque l'on utilise l'expression « la composition », on fait référence à la composition de l'au moins une couche interne du pneumatique selon la présente invention.

### II- DESCRIPTION DE L'INVENTION

### II-1 Matrice élastomérique

La composition selon l'invention comprend de 80 à 100 pce d'un élastomère isoprénique. Ainsi, la composition selon l'invention peut contenir un seul élastomère isoprénique ou un mélange d'un élastomère isoprénique avec un ou plusieurs autres élastomères diéniques.

Par "élastomère isoprénique", on entend de manière connue un homopolymère ou un copolymère d'isoprène, en d'autres termes un élastomère diénique choisi dans le groupe constitué par le caoutchouc naturel (NR) qui peut être plastifié ou peptisé, les polyisoprènes de synthèse (IR), les différents copolymères d'isoprène et les mélanges de ces élastomères. Parmi les copolymères d'isoprène, on citera en particulier les copolymères d'isobutène-isoprène (caoutchouc butyle IIR), d'isoprène-styrène (SIR), d'isoprène-butadiène (BIR) ou d'isoprène-butadiène-styrène (SBIR). De préférence, l'élastomère isoprénique est choisi dans le groupe comprenant ou constitué par du caoutchouc naturel, un polyisoprène de synthèse et un de leurs mélanges, de préférence encore, l'élastomère isoprénique est du caoutchouc naturel.

De préférence, l'élastomère isoprénique comporte un taux massique de liaisons cis 1,4 d'au moins 90%, plus préférentiellement d'au moins 98% par rapport à la masse de l'élastomère isoprénique.

Préférentiellement le taux d'élastomère isoprénique, de préférence le caoutchouc naturel, est de 90 à 100 pce, plus préférentiellement de 95 à 100 pce. En particulier le taux d'élastomère isoprénique, de préférence encore de caoutchouc naturel, est très préférentiellement de 100 pce.

Ainsi, selon l'invention, la composition peut comprendre de 0 à 20 pce d'un ou plusieurs autres élastomères diénique autres qu'isoprénique. De préférence, le taux d'élastomère diénique autre qu'isoprénique est compris dans un domaine allant de 0 à 10 pce, de préférence de 0 à 5 pce. De préférence encore, la composition ne comprend pas d'élastomère diénique autre qu'isoprénique.

Par élastomère (ou « caoutchouc », les deux termes étant considérés comme synonymes) du type "diénique", on rappelle ici que doit être compris de manière connue un (on entend un ou plusieurs) élastomère issu au moins en partie (i.e., un homopolymère ou un copolymère) de monomères diènes (monomères porteurs de deux doubles liaisons carbone-carbone, conjuguées ou non).

Ces élastomères diéniques peuvent être classés dans deux catégories : "essentiellement insaturés" ou "essentiellement saturés". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, on entend plus particulièrement par élastomère diénique susceptible d'être utilisé dans les compositions conformes à l'invention :
a) tout homopolymère obtenu par polymérisation d'un monomère diène conjugué ayant de 4 à 12 atomes de carbone;
b) tout copolymère obtenu par copolymérisation d'un ou plusieurs diènes conjugués entre eux ou avec un ou plusieurs composés vinyle aromatique ayant de 8 à 20 atomes de carbone;
c) un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;
d) un copolymère d'isobutène et d'isoprène (caoutchouc butyle), ainsi que les versions halogénées, en particulier chlorées ou bromées, de ce type de copolymère.

Bien qu'elle s'applique à tout type d'élastomère diénique, l'homme du métier du pneumatique comprendra que la présente invention est de préférence mise en œuvre avec des élastomères diéniques essentiellement insaturés, en particulier du type (a) ou (b) ci-dessus.

A titre de diènes conjugués conviennent notamment le butadiène-1,3, le 2-méthyl-1,3-butadiène, les 2,3-di(alkyle en C1-C5)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, l'aryl-1,3-butadiène, le 1,3-pentadiène, le 2,4-hexadiène. A titre de composés vinylaromatique conviennent par exemple le styrène, l'ortho-, méta-, para-méthylstyrène, le mélange commercial "vinyle-toluène", le paratertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% et 80% en poids d'unités vinylaromatique. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C Sn ou des groupes fonctionnels aminés tels que aminobenzophénone par exemple ; pour un couplage à une charge inorganique renforçante telle que silice, on peut citer par exemple des groupes fonctionnels silanol ou polysiloxane ayant une extrémité silanol (tels que décrits par exemple dans FR 2 740 778 ou US 6,013,718 et WO 2008/141702), des groupes alkoxysilane (tels que décrits par exemple dans FR 2 765 882 ou US 5,977,238), des groupes carboxyliques (tels que décrits par exemple dans WO 01/92402 ou US 6,815,473, WO 2004/096865 ou US 2006/0089445) ou encore des groupes polyéthers (tels que décrits par exemple dans EP 1 127 909 ou US 6,503,973, WO 2009/000750 et WO 2009/000752). Comme autres exemples d'élastomères fonctionnalisés, on peut citer également des élastomères (tels que SBR, BR, NR ou IR) du type époxydés. De manière avantageuse, l'élastomère diénique de la composition ne comprend pas d'élastomère isoprénique époxydé, de préférence pas d'élastomère époxydé, ou en contient moins de 10 pce, de préférence moins de 5 pce.

Selon l'invention, l'élastomère diénique autre qu'isoprénique peut être choisi, par exemple, dans le groupe des élastomères diéniques fortement insaturés constitué par les polybutadiènes (en abrégé "BR"), les copolymères de butadiène et les mélanges de ces élastomères. De tels copolymères sont plus préférentiellement choisis dans le groupe constitué par les copolymères de butadiène-styrène (SBR), les copolymères de butadiène-acrylonitrile (NBR), les copolymères de butadiène-styrène-acrylonitrile (NSBR) ou un mélange de deux ou plus de ces composés.

Par ailleurs, qu'elles contiennent un seul élastomère isoprénique ou un mélange d'au moins un élastomère isoprénique et d'un ou plusieurs élastomères diéniques, les compositions de l'invention peuvent être utilisées en association avec tout type d'élastomère synthétique autre que diénique, voire avec des polymères autres que des élastomères, par exemple des polymères thermoplastiques, étant entendu que la matrice élastomérique (incluant les élastomères diéniques et synthétiques, et les polymères précités) comprenne majoritairement de l'élastomère isoprénique. De préférence, la composition selon l'invention ne contient pas d'élastomère thermoplastique ou en contient moins de 10 pce, de préférence moins de 5 pce.

### 11-2 Charge renforçante

La composition du pneumatique selon l'invention comprend avantageusement une charge renforçante, connue pour ses capacités à renforcer une composition de caoutchouc utilisable pour la fabrication de pneumatiques.

Selon l'invention, la composition de la couche interne du pneumatique selon l'invention comprend une charge renforçante comprenant majoritairement du noir de carbone.

Les noirs utilisables dans le cadre de la présente invention peuvent être tout noir conventionnellement utilisé dans les pneumatiques ou leurs bandes de roulement (noirs dits de grade pneumatique). Parmi ces derniers, on citera plus particulièrement les noirs de carbone renforçants des séries 100, 200, 300, ou les noirs de série 500, 600 ou 700 (grades ASTM), comme par exemple les noirs N115, N134, N234, N326, N330, N339, N347, N375, N550, N683, N772). Ces noirs de carbone peuvent être utilisés à l'état isolé, tels que disponibles commercialement, ou sous tout autre forme, par exemple comme support de certains des additifs de caoutchouterie utilisés. Les noirs de carbone pourraient être par exemple déjà incorporés à l'élastomère diénique, notamment isoprénique sous la forme d'un masterbatch (voir par exemple demandes WO 97/36724 ou WO 99/16600).

Comme exemples de charges organiques autres que des noirs de carbone, on peut citer les charges organiques de polyvinyle fonctionnalisé telles que décrites dans les demandes WO 2006/069792, WO 2006/069793, WO 2008/003434 et WO 2008/003435.

Avantageusement, le noir de carbone comprend majoritairement un noir de carbone présentant une surface spécifique BET supérieur ou égal à 15 m²/g, de préférence supérieur à ou égale à 50 m²/g, de préférence une surface spécifique BET comprise dans un domaine allant de 50 à 120 m²/g, de préférence encore de 70 à 120 m²/g. Par ailleurs, le noir de carbone présente avantageusement un indice d'absorption d'huile COAN supérieur à 80 mL/100g, de préférence un indice d'absorption d'huile COAN compris dans un domaine allant de 80 à 100 mL/100g, de préférence encre de 90 à 100 mL/100g.

La surface spécifique BET des noirs de carbone est mesurée selon la norme D6556-10 [méthode multipoints (au minimum 5 points) ― gaz : azote ― domaine de pression relative P/P0 : 0.1 à 0.3]. Le COAN, ou indice d'absorption d'huile par des d'échantillons comprimés (« Compressed Oil Absorption Number » en anglais), des noir de carbone, est mesuré selon la norme ASTM D3493-16.

Selon un mode de réalisation de l'invention, la charge renforçante comprend en outre de la silice. Selon l'invention, si de la silice est utilisée dans la composition de la couche interne du pneumatique selon l'invention, elle est présente de manière minoritaire, c'est-à-dire que le ratio de noir de carbone sur le taux de silice dans la composition est supérieur à 1.

Lorsque la charge renforçante comprend de la silice, il est préférable que le ratio de noir de carbone sur le taux de silice dans la composition soit compris dans un domaine allant de 2 à 10, de préférence de 3 à 8.

La silice utilisable dans le cadre de la présente invention peut être toute silice connue de l'homme du métier, notamment toute silice précipitée ou pyrogénée présentant une surface BET ainsi qu'une surface spécifique CTAB toutes deux inférieures à 450 m2/g, de préférence de 30 à 400 m2/g.

La surface spécifique BET de la silice est déterminée de manière connue par adsorption de gaz à l'aide de la méthode de Brunauer-Emmett-Teller décrite dans "The Journal of the American Chemical Society" Vol. 60, page 309, février 1938, plus précisément selon la norme française NF ISO 9277 de décembre 1996 (méthode volumétrique multipoints (5 points) - gaz: azote - dégazage: 1 heure à 160°C - domaine de pression relative p/po : 0.05 à 0.17). La surface spécifique CTAB de la silice est déterminée selon la norme française NF T 45-007 de novembre 1987 (méthode B).

De préférence, la silice présente une surface spécifique BET inférieure à 200 m²/g et/ou une surface spécifique CTAB est inférieure à 220 m²/g, de préférence une surface spécifique BET comprise dans un domaine allant de 125 à 200 m²/g et/ou une surface spécifique CTAB comprise dans un domaine allant de 140 à 170 m²/g.

A titres de silices utilisables dans le cadre de la présente invention, on citera par exemple les silices précipitées hautement dispersibles (dites "HDS") « Ultrasil 7000 » et « Ultrasil 7005 » de la société Evonik, les silices « Zeosil 1165MP, 1135MP et 1115MP » de la société Rhodia, la silice « Hi-Sil EZ150G » de la société PPG, les silices « Zeopol 8715, 8745 et 8755 » de la Société Huber, les silices à haute surface spécifique telles que décrites dans la demande WO 03/16837.

L'homme du métier comprendra qu'à titre de charge équivalente de la silice décrite dans la présente, pourrait être utilisée une charge renforçante d'une autre nature, notamment organique, dès lors que cette charge renforçante serait recouverte d'une couche de silice, ou bien comporterait à sa surface des sites fonctionnels, notamment hydroxyles, nécessitant l'utilisation d'un agent de couplage pour établir la liaison entre la charge et l'élastomère.

Lorsque la charge renforçante comprend de la silice, la composition de la couche interne du pneumatique selon l'invention peut comprendre un agent de couplage ou en être exempt.

Pour coupler la silice renforçante à l'élastomère diénique, on utilise de manière bien connue un agent de couplage (ou agent de liaison) au moins bifonctionnel destiné à assurer une connexion suffisante, de nature chimique et/ou physique, entre la silice (surface de ses particules) et l'élastomère diénique. On utilise en particulier des organosilanes ou des polyorganosiloxanes au moins bifonctionnels.

L'homme du métier peut trouver des exemples d'agent de couplage dans les documents suivants: WO 02/083782, WO 02/30939, WO 02/31041, WO 2007/061550, WO 2006/125532, WO 2006/125533, WO 2006/125534, US 6,849,754, WO 99/09036, WO 2006/023815, WO 2007/098080, WO 2010/072685 et WO 2008/055986.

On peut citer notamment les composés alkoxysilane-polysulfure, en particulier les polysulfures de bis-(trialkoxylsilylpropyle), tout particulièrement le disulfure de bis 3-triéthoxysilylpropyle (en abrégé "TESPD") et le tétrasulfure de bis 3-triéthoxysilylpropyle (en abrégé "TESPT"). On rappelle que le TESPD, de formule [(C₂H₅O)₃Si(CH₂)₃S]₂, est notamment commercialisé par la société Degussa sous les dénominations Si266 ou Si75 (dans le second cas, sous forme d'un mélange de disulfure (à 75% en poids) et de polysulfures). Le TESPT, de formule [(C₂H₅O)₃Si(CH₂)₃S]₂ est commercialisé notamment par la société Degussa sous la dénomination Si69 (ou X50S lorsqu'il est supporté à 50%) en poids sur du noir de carbone), sous la forme d'un mélange commercial de polysulfures Sx avec une valeur moyenne pour x qui est proche de 4.

Avantageusement, la composition selon l'invention ne comprend pas d'agent de couplage ou en comprend moins de 11%, de préférence, moins de 5%, de préférence, moins de 4% en masse par rapport à la masse de silice. Lorsque la composition comprend un agent de couplage, le taux d'agent de couplage peut être compris dans un domaine allant de 0,1 à 0,5 pce, de préférence de 0,1 à 0,3 pce.

Selon un autre mode de réalisation de l'invention, la charge renforçante comprend exclusivement du noir de carbone.

Que de la silice soit présente ou non dans la composition selon l'invention, la charge renforçante peut comprendre un mélange de noir de carbone, de préférence un mélange de noir de carbone présentant une surface spécifique BET inférieure à 70 m²/g, dit noir grossier et de noir de carbone présentant une surface spécifique BET supérieure au égale à 70 m²/g, dit noir fin. L'utilisation de ce mélange de noir de carbone est particulièrement préférée lorsque la charge renforçante de la composition comprend exclusivement du noir de carbone.

Dans la présente, on entend par « noir de carbone grossier » un noir de carbone présentant une surface spécifique BET inférieure à 70 m²/g. Dans la présente, on entend par « noir de carbone fin » un noir de carbone présentant une surface spécifique BET supérieur ou égale à 70 m²/g.

Les noirs de carbone grossiers utilisables dans le cadre de la présente invention peuvent être tout noir conventionnellement utilisé dans les pneumatiques ou leurs bandes de roulement (noirs dits de grade pneumatique) des séries 400, 500, 600 ou 700 (grades ASTM), comme par exemple les noirs N550, N683, N772.

Les noirs de carbone fins utilisables dans le cadre de la présente invention peuvent être tout noir conventionnellement utilisé dans les pneumatiques ou leurs bandes de roulement (noirs dits de grade pneumatique) des séries 100, 200 ou 300 (grades ASTM), comme par exemple les noirs N115, N134, N234, N326, N330, N339, N347, N375.

De préférence, le noir de carbone grossier présente une surface spécifique BET inférieure à 50 m²/g, de préférence une surface spécifique BET comprise dans un domaine allant de 32 à 49 m²/g. De préférence encore, le noir de carbone grossier présente un indice d'absorption d'huile COAN inférieur à 90 mL/100g, de préférence inférieur à 87 mL/100g, de préférence inférieur à 70 mL/100g. Avantageusement, le noir de carbone grossier présente un COAN compris dans un domaine allant de 50 à 85 mL/100g, de préférence de 55 à 85 mL/100g, de préférence un COAN compris dans un domaine allant de 50 à 69mL/100g.

De préférence, le noir de carbone fin présente une surface spécifique BET comprise dans un domaine allant de 70 à 100 m²/g, de préférence de 75 à 100 m²/g. De préférence encore, le noir de carbone fin présente un indice d'absorption d'huile COAN supérieur ou égal à 90 mL/100g. Avantageusement, le noir de carbone grossier présente un COAN compris dans un domaine allant de 90 à 110 mL/100g, de préférence de 95 à 110 mL/100g.

Que la charge renforçante comprenne un mélange de noir de carbone et de silice, ou exclusivement du noir de carbone, le taux total de charge renforçante dans la composition est de préférence compris dans un domaine allant de 15 à 200 pce, de préférence de 15 à 150 pce, de préférence de 20 à 120 pce, de préférence de 25 à 100 pce, de préférence de 30 à 80 pce.

Lorsque la charge renforçante comprend de la silice, le taux de silice dans la composition peut être par exemple compris dans un domaine allant de 5 à 70 pce, de préférence de 5 à 40 pce, de préférence encore de 5 à 20 pce.

Lorsque la charge renforçante comprend exclusivement du noir de carbone, le taux de noir de carbone dans la composition est de préférence compris dans un domaine allant de 15 à 70 pce, de préférence de 30 à 65 pce.

De préférence, lorsque la charge renforçante comprend un mélange de noir de carbone fin et de noir de carbone grossier, la composition peut avantageusement comprendre de 5 à 60 pce de noir grossier et de 10 à 30 pce de noir fin. De manière avantageuse, le taux de noir de carbone grossier est compris dans un domaine allant de 10 à 60 pce, de préférence de 15 à 60 pce, de préférence de 15 à 50 pce, de préférence de 20 à 40 pce ; et le taux de noir de carbone grossier est compris dans un domaine allant de 10 à 25 pce, de préférence de 10 à 20 pce.

### 11-3 Résine renforçante

La composition selon l'invention comprend également une résine renforçante (ou résine durcissante) connu de l'homme du métier pour rigidifier des compositions de caoutchouc, notamment en augmentant leur Module de Young ou encore le complexe de cisaillement dynamique G^{∗}. Ainsi, une composition de caoutchouc dans laquelle une résine renforçante a été ajouté présentera une rigidité, notamment un Module de Young ou le complexe de cisaillement dynamique G^{∗}, plus élevée que cette composition sans résine renforçante.

L'homme du métier peut mesurer le module de Young (également appelé module d'élasticité ou encore module de traction) des compositions de caoutchouc selon la norme ASTM 412-98a., ou selon la norme NF EN ISO 527-2 (2012) sur une éprouvette de type A selon la norme DIN EN ISO 3167 (2014). Il peut également mesure le complexe de cisaillement dynamique G^{∗} sur un viscoanalyseur (Metravib VA4000), de manière bien connue de l'homme du métier selon la norme ASTM D 5992-96, par exemple en enregistrant la réponse d'un échantillon de composition réticulée (éprouvette cylindrique de 4 mm d'épaisseur et de 400 mm² de section), soumis à une sollicitation sinusoïdale en cisaillement simple alterné, à la fréquence de 10Hz, dans les conditions définies de température (par exemple à 60°C) selon la norme ASTM D 1349-99, ou selon les cas à une température différente. On effectue un balayage en amplitude de déformation de 0,1 à 50% (cycle aller), puis de 50% à 0,1% (cycle retour). Pour le cycle retour, on indique le module complexe de cisaillement dynamique G^{∗} à une déformation déterminée (par exemple 10%).

Dans ce cadre, l'augmentation de la rigidité est réalisée par polymérisation ou réticulation de la résine renforçante de manière à former dans la grande majorité des cas un réseau tridimensionnel. Cette réticulation nécessite la plupart du temps l'emploi d'un co-agent (souvent appelé durcisseur) et/ou d'un chauffage (à une température supérieure ou égale de 100°C, voire supérieure ou égale à 130°C).

Le taux de résine renforçante dans la composition de couche interne du pneumatique selon l'invention est compris dans un domaine allant de 1 à 45 pce. Avantageusement, la comprend de 0,5 à 30 pce d'une résine renforçante et de 0,5 à 15 pce d'un co-agent de la résine renforçante.

Les résines renforçantes communément utilisées sont les résines phénoliques, les résines époxydes, les résines benzoxazines, les bismaléimides, les résines polyuréthanes, etc.

Les résines renforçantes classiquement utilisées dans les compositions de caoutchouc pour pneumatiques sont à base d'un système accepteur/donneur de méthylène. Les termes "accepteur de méthylène" et "donneur de méthylène" sont bien connus de l'homme du métier et largement utilisés pour designer des composés aptes à réagir ensemble (réticulation). La réticulation de la résine est provoquée lors de la cuisson de la matrice de caoutchouc, par formation de ponts méthylènes (-CH2-) entre les carbones en positions ortho et/ou para des noyaux phénoliques de la résine et le donneur de méthylène et créant ainsi un réseau de résine tridimensionnel qui vient se superposer et s'interpénétrer avec le réseau charge renforçante/élastomère d'une part et, avec le réseau élastomère/soufre d'autre part (si l'agent de réticulation est le soufre). Des exemples de tels accepteur et donneur de méthylène sont décrits dans WO 02/10269.

Il existe de nombreuses autres résines renforçantes utilisables dans le cadre de la présente invention, associées le cas échéant avec un co-agent de la résine renforçante. A titre d'exemple on peut citer notamment ceux décrit dans les demandes WO 2011/029938, WO 2008/080535, WO 2014/016346, WO2013/017422 ou WO 2014/016344.

Selon l'invention, la résine renforçante est de préférence choisie dans le groupe comprenant ou constitué par les résines phénoliques, les résines époxydes, les résines benzoxazines, les bismaléimides, les résines polyuréthanes et leurs mélanges.

De manière particulièrement avantageuse, la résine renforçante est une résine phénolique choisie dans le groupe comprenant ou constitué par les résines à base de polyphénol, d'alkylphénol, d'aralkylphénol et leurs mélanges. De préférence la résine renforçante est une résine phénolique choisie dans le groupe comprenant constitué par les résines à base d'hydroxybenzène, de bisphénol (de préférence le diphénylolpropane ou le diphénylolméthane), de naphtol, de crésol, de t-butylphénol, d'octylphénol, de nonylphénol, de résorcinol, de phloroglucinol, de cardanol, de xylénol (notamment le 3,5-xylénol), de 1-naphtol, de 2-naphtol, de 1,5-naphtalène diol, de 2,7-naphtalène diol, de pyrogallol, de 2-méthyl hydroquinone, de 4-méthyl-catéchol, de 2-méthyl-catéchol, d'orcinol (5-méthylbenzene-1,3-diol), d'hydroquinone (benzène-1,4-diol) et de leurs mélanges.

La résine renforçante peut également être une résine époxyde choisie dans le groupe comprenant ou constitué par les composés époxydes aromatiques, les composés époxydes alicycliques, les composés époxydes aliphatiques et leurs mélanges, de préférence la résine renforçante est une résine époxyde choisie dans le groupe comprenant ou constitué par le 2,2 bis[4-(glycidyloxy) phényl] propane, le poly[o-crésylglycidyl éther)-co-formaldéhyde], le poly[phénylglycidyl éther)-co-formaldéhyde], poly[(phenylglycidyl éther)-co(hydroxybenzaldehyde glycidyl éther)] et leurs mélanges.

Le taux de résine renforçante dans la composition est avantageusement compris dans un domaine allant de 0,5 à 30 pce, de préférence de 2 à 20 pce, de préférence encore de 3 à 15 pce.

Les résines renforçantes au sens de la présente invention ne doivent pas être confondues avec les résines hydrocarbonées dites plastifiantes, qui sont par nature miscibles (i.e., compatibles) aux taux utilisés avec les compositions de polymères auxquelles elles sont destinées, de manière à agir comme de véritables agents diluants. Des résines hydrocarbonées plastifiantes ont notamment été décrites par exemple dans la demande WO 2013/092096 ou dans l'ouvrage intitulé "Hydrocarbon Resins" de R. Mildenberg, M. Zander et G. Collin (New York, VCH, 1997, ISBN 3-527-28617-9) dont le chapitre 5 est consacré à leurs applications, notamment en caoutchouterie pneumatique (5.5. "Rubber Tires and Mechanical Goods"). Elles peuvent être aliphatiques, cycloaliphatiques, aromatiques, aromatiques hydrogénées, du type aliphatique/aromatique.

Selon l'invention, la composition de la couche interne du pneumatique peut comprendre en outre un co-agent de la résine renforçante (ou durcisseur). L'homme du métier sait quel co-agent associer à quelle résine renforçante en se basant sur ses connaissances générales ou sur les documents précités.

Selon l'invention, le co-agent de la résine renforçante peut être choisi dans le groupe comprenant ou constitué par les donneurs de méthylène, les polyaldéhydes, les polyamines, les polyimines, les polyamines, les polyaldimines, les polykétimines, les anhydrides d'acide et leurs mélanges.

Lorsque la résine renforçante utilisée est une résine phénolique, le co-agent de la résine renforçante est de préférence un donneur de méthylène choisi dans le groupe comprenant ou constitué par l'hexaméthylènetétramine, l'hexaméthoxyméthylmélamine, l'hexaéthoxyméthylmélamine, les polymères de paraformaldéhyde, les dérivés N-méthylol de la mélamine, et leurs mélanges, de préférence dans le groupe comprenant ou constitué par l'hexaméthylènetétramine, l'hexaméthoxyméthylmélamine, l'hexaéthoxyméthylmélamine et leurs mélanges.

Lorsque la résine renforçante utilisée est une résine époxy, le co-agent de la résine renforçante est de préférence un durcisseur aminé choisi dans le groupe constitué par les polyamines (notamment les polyamines aliphatiques, les polyamines alicycliques, les amines aliphatiques et les polyamines aromatiques), les dicyandiamides, les hydrazides, les composés imidazole, les sels de sulfonium, les sels d'onium, les ketimines, les anhydrides d'acides et leurs mélanges, de préférence le co-agent de la résine renforçante est un durcisseur aminé choisi dans le groupe constitué par l'éthylènediamine, le diéthylènetriamine, le triéthylènetétramine, le 1,8-diaminooctane, le 1,3 bis(aminométhyl)cyclohexane, que le m-xylylènediamine, le p-xylylènediamine, le m-phénylènediamine, 2,2-bis(4-aminophényl)propane, diaminodiphénylméthane, le 3,5-diéthyl-2,4 diamine toluène, le 3,5-diéthyl-2,6-diamine toluène, le méthyl-diamine thiotoluène , le diméthyl-diamine thiotoluène, diaminodiphénylsulfone, 2,2-bis(4-aminophényl)-p-diisopropylbenzène, le 3,3'-diaminobenzidine, le polyanhydride le 4,4'-(4,4'-isopropylidènediphénoxy)bis(phtalic anhydride), le pyromellitic dianhydride et leurs mélanges.

L'homme du métier sait adapter le taux de co-agent de la résine renforçante en fonction du taux de résine renforçante utilisé. De préférence, le taux de co-agent de la résine renforçante dans la composition est compris dans un domaine allant de 0,5 à 15 pce, de préférence de de 1 à 10 pce, de préférence encore de 2 à 8 pce. Ainsi, la composition de la couche interne du pneumatique selon l'invention peut comprendre optionnellement de 0,5 à 15 pce, de préférence de 1 à 10 pce, de préférence encore de 2 à 8 pce d'un co-agent de la résine renforçante.

### 11-4 Sel d'un métal alcalino-terreux, alcalin ou lanthanide

La composition de la couche interne du pneumatique selon l'invention comprend un sel de métal alcalino-terreux, alcalin ou lanthanide.

Le sel d'un métal alcalino-terreux, alcalin ou lanthanide est avantageusement un acétylacétonate d'un métal alcalino-terreux, alcalin ou lanthanide.

De préférence, le métal alcalino-terreux, alcalin ou lanthanide du sel est choisi dans le groupe constitué par le lithium, le sodium, le potassium, le calcium, le magnésium, le lanthane, le cérium, le praséodyme, le néodyme, le samarium, l'erbium et leurs mélanges. De préférence encore, le sel d'un métal alcalino-terreux, alcalin ou lanthanide est un sel de magnésium ou de néodyme, de préférence de magnésium. En d'autres termes, le sel d'un métal alcalino-terreux, alcalin ou lanthanide est avantageusement un acétylacétonate de magnésium ou de néodyme, de préférence un acétylacétonate de magnésium.

Le taux du sel de métal alcalino-terreux, alcalin ou lanthanide peut être compris par exemple dans un domaine allant de 0,1 à 5 pce, de préférence de 0,5 à 4 pce et plus préférentiellement de 0,5 à 2 pce.

### 11-5 Système de réticulation

Le système de réticulation peut être à base de soufre moléculaire et/ou de donneurs de soufre et/ou de peroxyde, bien connus de l'homme du métier.

Parmi les peroxydes, bien connus de l'homme de l'art, il est préférable d'utiliser pour l'invention un peroxyde choisi dans la famille des peroxydes organiques. De préférence, le peroxyde est un peroxyde organique choisi dans le groupe comprenant ou constitué par le peroxyde de dicumyle, les peroxydes d'aryle ou de diaryle, le peroxyde de diacétyle, le peroxyde de benzoyle, le peroxyde de dibenzoyle, le peroxyde de ditertbutyle, le peroxyde de tertbutylcumyle, le 2,5-bis (tertbutylperoxy)-2,5-diméthylhexane, le n-butyl-4,4'-di(tert-butylperoxy) valérate, le OO-(t-butyl)-O-(2-éthylhexyl) monoperoxycarbonate, le tertio-butyl peroxyisopropylcarbonate, le tertio-butyl peroxybenzoate, le tert-butyl peroxy-3,5,5-triméthylhexanoate, le 1,3(4)-bis(tert-butylperoxyisopropyl)benzene et les mélanges de ces derniers, encore préférentiellement dans le groupe consistant en le peroxyde de dicumyle, le n-butyl-4,4'-di(tert-butylperoxy)-valérate, le OO-(t-butyl) O-(2-éthylhexyl) monoperoxycarbonate, le tertio-butyl peroxyisopropylcarbonate, le tertio-butyl peroxybenzoate, le tert-butyl peroxy-3,5,5-triméthylhexanoate, le 1,3(4)-bis(tert-butylperoxyisopropyl)benzene et les mélanges de ces derniers. Il existe dans le commerce divers produits conditionnés, connus sous leurs marques de fabrique; on peut citer:-le « Dicup » de la société Hercules Powder Co., le « Perkadox Y12 » de la Societe Noury van der Lande, le « Peroximon F40 » de la société Montecatini Edison S.p.A., le « Trigonox » de la Societe Noury van der Lande, le « Varox » de la société R.T.Vanderbilt Co., ou encore le « Luperko », de la société Wallace & Tiernan, Inc.

Préférentiellement, la quantité de peroxyde à utiliser pour les besoins de l'invention est inférieure ou égale à 3 pce. De préférence, la quantité de peroxyde dans la composition est comprise dans un domaine allant de 0,1 à 3 pce. Plus préférentiellement, la quantité de peroxyde dans la composition est comprise dans un domaine allant de 0,2 à 2,5 pce, de préférence de 0,25 à 1,8 pce.

Le système de réticulation est préférentiellement un système de vulcanisation à base de soufre moléculaire (et/ou d'un agent donneur de soufre).

Avantageusement, le taux de soufre dans la composition est supérieur à 2,5 pce, de préférence le taux de soufre est compris dans un domaine allant de 3 à 10 pce, de préférence de 3 à 7 pce.

La composition de la couche interne du pneumatique selon l'invention comprend avantageusement un accélérateur de vulcanisation, qui est de préférence choisi dans le groupe constitué par les accélérateurs de la famille des thiazoles ainsi que leurs dérivés, de la famille des sulfénamides, de la famille des thiourées et de leurs mélanges. Avantageusement, l'accélérateur de vulcanisation est choisi dans le groupe constitué par le disulfure de 2-mercaptobenzothiazyle (MBTS), le N-cyclohexyl-2-benzothiazyle sulfénamide (CBS), le N,N-dicyclohexyl-2-benzothiazyle sulfénamide (DCBS), le N-ter-butyl-2-benzothiazyle sulfénamide (TBBS), le N-ter-butyl-2-benzothiazyle sulfénimide (TBSI), le disulfure de morpholine, le N-morpholino-2-benzothiazyle sulfénamide (MBS), le dibutylthiourée (DBTU), et de leurs mélanges.

Le taux d'accélérateur de vulcanisation est préférentiellement compris dans un domaine allant de 0,5 à 3 pce, de préférence de 0,6 à 2,5 pce, de préférence encore de 0,7 à 2 pce. De manière particulièrement avantageuse, le rapport du taux de soufre sur le taux d'accélérateur de vulcanisation est supérieur à 1, de préférence supérieur à 2, de préférence encore supérieur à 3. En particulier, le rapport du taux de soufre sur le taux d'accélérateur de vulcanisation est préférentiellement compris entre 1 et 10, de préférence entre 2 et 9, de préférence encore entre 3 et 8.

### 11-6 Additifs divers

La composition de la couche internet du pneumatique selon l'invention peut comporter également tout ou partie des additifs usuels habituellement utilisés dans les compositions d'élastomères pour pneumatiques, comme par exemple des plastifiants liquides à 23°C (présentant notamment une Tg inférieure à -20°C), des résines plastifiantes hydrocarbonées présentant une haute Tg (notamment supérieure à 20°C), des pigments, des agents de protection tels que cires anti-ozone, anti-ozonants chimiques, antioxydants, des agents anti-fatigue, bien connus de l'homme du métier.

La composition selon l'invention peut également comprendre de l'acide stéarique ou un de ses sels. A titre d'exemple de sel d'acide stéarique, on peut citer le stéarate de zinc ou le stéarate de cadmium. Le taux d'acide stéarique ou d'un de ses sels peut avantageusement être compris dans un domaine allant de 0,3 à 3 pce, de préférence de 0,4 à 2 pce, de préférence de 0,5 à 1 pce.

La composition selon l'invention peut en outre comprendre un antioxydant choisi dans le groupe constitué par les p-phénylène diamines substituées, les diphénylamines substituées, les triphénylamines substituées, les dérivés de la quinoléine, et leurs mélanges. De préférence, l'antioxydant est choisi dans le groupe constitué par les p-phénylène diamines substituées et leurs mélanges. Le taux d'antioxydant peut avantageusement être compris dans un domaine allant de 1 à 5 pce, de préférence de 2 à 3 pce.

La composition selon l'invention peut également comprendre un oxyde métallique. L'oxyde métallique peut être choisi dans le groupe constitué par les oxydes des métaux du groupe II, IV, V, VI, VII et VIII, et leurs mélanges. De préférence, l'oxyde métallique est choisi dans le groupe constitué par les oxydes de zinc, de magnésium, de cobalt, de nickel et leurs mélanges. De préférence encore, l'oxyde métallique est un oxyde de zinc. Le taux d'oxyde métallique peut avantageusement être compris dans un domaine allant de 2 à 20 pce, de préférence de 6 à 10 pce. Avantageusement, le ratio d'oxyde métallique sur l'acide stéarique ou l'un de ses sels est compris supérieur à 3, de préférence le ratio d'oxyde métallique sur l'acide stéarique ou l'un de ses sels est compris dans un domaine allant de 3 à 20, de préférence de 5 à 15, de préférence de 5 à 10.

### 11-7 Pneumatiques

Le pneumatique selon l'invention comprend au moins une couche interne dont la composition est telle que défini ci-dessus.

Selon l'invention, la couche interne peut être choisie dans le groupe constitué par les nappes carcasse, les nappes sommet, les bourrages-tringle, les pieds sommets, les couches de découplage, les gommes de bordure, les gommes de bourrage, la sous-couche de bande de roulement et les combinaisons de ces couches internes. De préférence, la couche interne est choisie dans le groupe constitué par les nappes carcasses, les nappes sommet, les pieds sommets, les couches de découplage, les gommes de bordures et les combinaisons de ces couches internes. Dans la présente, on entend par « gomme de bordure », une couche positionné dans le pneumatique directement au contact de l'extrémité d'une nappe de renforcement, de l'extrémité d'un élément de renforcement ou d'une autre gomme de bordure.

La présente invention concerne particulièrement des pneumatiques destinés à équiper des véhicules à moteur de type tourisme, SUV ("Sport Utility Vehicles"), ou deux roues (notamment motos), ou avions, ou encore des véhicules industriels choisis parmi camionnettes, « Poids-lourd » - c'est-à-dire métro, bus, engins de transport routier (camions, tracteurs, remorques), véhicules hors-la-route tels qu'engins agricoles ou de génie civil -, et autres.

Sont concerné les pneumatiques tant à l'état cru (c'est à dire, avant cuisson) qu'à l'état cuit (c'est à dire, après réticulation ou vulcanisation).

### 11-8 Préparation des compositions de caoutchouc

Les compositions utilisées dans le cadre de la présente invention, peuvent être fabriquées dans des mélangeurs appropriés, en utilisant deux phases de préparation successives bien connues de l'homme du métier : une première phase de travail ou malaxage thermomécanique (phase dite "non-productive") à haute température, jusqu'à une température maximale comprise entre 110°C et 190°C, de préférence entre 130°C et 180°C, suivie d'une seconde phase de travail mécanique (phase dite "productive") jusqu'à une plus basse température, typiquement inférieure à 110°C, par exemple entre 40°C et 100°C, phase de finition au cours de laquelle est incorporé le système de réticulation.

Le procédé pour préparer de telles compositions comporte par exemple les étapes suivantes :
a) incorporer à un élastomère diénique, au cours d'une première étape (dite "non-productive"), une charge renforçante, en malaxant thermomécaniquement le tout (par exemple en une ou plusieurs fois), jusqu'à atteindre une température maximale comprise entre 110°C et 190°C ;
b) refroidir l'ensemble à une température inférieure à 100°C ;
c) incorporer ensuite, au cours d'une seconde étape (dite "productive"), un système de réticulation ;
d) malaxer le tout jusqu'à une température maximale inférieure à 110°C.

La résine renforçante peut être introduite soit durant la phase non-productive (a), soit durant la phase productive (c). Lorsque la composition comprend en outre un co-agent de la résine renforçante, la résine renforçante est préférentiellement introduite lors de la phase non productive (a) et le co-agent de la résine renforçante lors de la phase productive (c).

A titre d'exemple, la phase non-productive est conduite en une seule étape thermomécanique au cours de laquelle on introduit, dans un mélangeur approprié tel qu'un mélangeur interne usuel, dans un premier temps tous les constituants de base nécessaires (élastomère diénique, charge renforçante, résine renforçante), puis dans un deuxième temps, par exemple après une à deux minutes de malaxage, les autres additifs, éventuels agents de recouvrement de la charge ou de mise en œuvre complémentaires, à l'exception du système de réticulation. La durée totale du malaxage, dans cette phase non-productive, est de préférence comprise entre 1 et 15 min.

La première étape de malaxage est généralement réalisée en incorporant la charge renforçante à l'élastomère en une ou plusieurs fois en malaxant thermomécaniquement. Dans le cas où la charge renforçante, en particulier le noir de carbone, est déjà incorporée en totalité ou en partie à l'élastomère sous la forme d'un masterbatch comme cela est décrit par exemple dans les demandes WO 97/36724 ou WO 99/16600, c'est le masterbatch qui est directement malaxé et le cas échéant on incorpore les autres élastomères ou charges renforçantes présents dans la composition qui ne sont pas sous la forme de masterbatch, ainsi que les additifs autres que le système de réticulation.

Après refroidissement du mélange ainsi obtenu, on incorpore alors dans un mélangeur externe tel qu'un mélangeur à cylindres, maintenu à basse température (par exemple entre 40°C et 100°C), le système de réticulation, et le cas échéant le co-agent de la résine renforçante. L'ensemble est alors mélangé (phase productive) pendant quelques minutes, par exemple entre 2 et 15 min.

La composition finale ainsi obtenue peut ensuite être calandrée, par exemple sous la forme d'une feuille, d'une plaque notamment pour une caractérisation au laboratoire, ou encore extrudée, par exemple pour former un profilé de caoutchouc utilisé pour la fabrication d'un pneumatique.

La cuisson peut être conduite, de manière connue de l'homme du métier, à une température généralement comprise entre 130°C et 200°C, sous pression, pendant un temps suffisant qui peut varier par exemple entre 5 et 90 min en fonction notamment de la température de cuisson, du système de réticulation adopté, de la cinétique de réticulation de la composition considérée ou encore de la taille du pneumatique comprenant un profilé précité.

### III- EXEMPLES

### III-1 Mesures et test utilisés

### Résistance à la propagation de fissure :

La vitesse de fissuration (Vp) a été mesurée sur des éprouvettes de compositions de caoutchouc, à l'aide d'une machine de fatigue cyclique (« Elastomer Test System ») du type 381, de la société MTS, comme expliqué ci-après.

La résistance à la fissuration est mesurée à l'aide de tractions répétées sur une éprouvette initialement accommodée (après un premier cycle de traction), puis entaillée. L'éprouvette de traction est constituée par une plaque de caoutchouc de forme parallélépipédique, par exemple d'épaisseur comprise entre 1 et 2 mm, de longueur entre 130 et 170 mm et de largeur entre 10 et 15 mm, les deux bords latéraux étant chacun recouverts dans le sens de la longueur d'un bourrelet de caoutchouc cylindrique (diamètre 5 mm) permettant l'ancrage dans les mors de la machine de traction. Les éprouvettes ainsi préparées sont testées à l'état neuf. Le test a été conduit à l'air, à une température de 20°C, 60°C ou 80°C. Après accommodation, 3 entailles très fines de longueur comprise entre 15 et 20 mm sont réalisées à l'aide d'une lame de rasoir, à milargeur et alignées dans le sens de la longueur de l'éprouvette, une à chaque extrémité et une au centre de cette dernière, avant le démarrage du test. A chaque cycle de traction, le taux de déformation de l'éprouvette est ajusté automatiquement de manière à maintenir constant le taux de restitution d'énergie (quantité d'énergie libérée lors de la progression de la fissure), à une valeur inférieure ou égale à environ 1500 J/m2. La vitesse de propagation de fissure est mesurée en nanomètre par cycle.

Les données présentées dans le Tableau 1 ci-dessous correspondent au pourcentage d'augmentation de la propagation de fissure de l'état initial à l'état vieilli (vieillissement thermo-oxydatif de 7 jours dans une étuve à une température de 77°C). Plus le pourcentage d'augmentation de propagation de fissure est grand, plus la composition est sensible à la fissuration.

### Pertes hystérétique :

Les pertes hystérétiques (P60) sont mesurées par rebond à 60°C à énergie imposée mesurée au huitième choc à 40% de déformation. La valeur, mesurée en %, est la différence entre l'énergie fournie et l'énergie restituée, rapportée à l'énergie fournie.

De manière bien connue de l'homme du métier, plus la valeur absolue de P60 est basse, plus la composition aura une hystérèse faible et donc une résistance au roulement améliorée. Les résultats sont présentés en performance base 100 par rapport au témoin T. Une valeur supérieure à celle du témoin T indique un résultat amélioré c'est-à-dire une meilleure résistance au roulement.

### Essais de traction :

Ces essais de traction permettent de déterminer les modules d'élasticité et les propriétés à la rupture et sont basées sur la norme NF ISO 37 de Décembre 2005 sur une éprouvette haltère de type 2. L'allongement rupture ainsi mesuré à 100°C est exprimé en % d'allongement.

Les résultats d'allongement rupture sont indiqués en base 100, la valeur 100 étant attribuée au témoin. Un résultat inférieur à 100 indiquant une diminution de la valeur concernée, et inversement, un résultat supérieur à 100, indiquera une augmentation de la valeur concernée.

### 111-2 Préparation des compositions

On procède pour les essais qui suivent de la manière suivante : on introduit dans un mélangeur interne (taux de remplissage final : environ 70% en volume), dont la température initiale de cuve est d'environ 60 °C, successivement, l'élastomère diénique, la charge renforçante, la résine renforçante ainsi que les divers autres ingrédients à l'exception du système de vulcanisation et du co-agent de la résine renforçante. On conduit alors un travail thermomécanique (phase non-productive) en une étape, qui dure au total environ 3 à 4 min, jusqu'à atteindre une température maximale de « tombée » de 165°C.

On récupère le mélange ainsi obtenu, on le refroidit puis on incorpore du soufre, un accélérateur de vulcanisation et le co-agent de la résine renforçante, sur un mélangeur (homo-finisseur) à 30 °C, en mélangeant le tout (phase productive) pendant un temps approprié (par exemple entre 5 et 12 min).

Les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques, soit extrudées sous la forme d'un profilé.

Les échantillons ainsi produits ont été cuits pendant 25 minutes à 150°C ou 90 minutes à 160°C dans une presse à cloche. Certains échantillons ont en outre subi, après cuissons, une étape de vieillissement thermo-oxydatif pendant une durée de 7 ou 14 jours dans une étuve à une température de 77°C, ceci afin de comparer les cinétiques des propriétés mesurées. Tous les échantillons ont été analysés après avoir été refroidis 24 heures à température ambiante.

### 111-3 Test de caoutchouterie

Les exemples présentés dans le Tableau 1 ont pour objet de comparer la résistance à la propagation de fissure d'une composition conforme à l'invention (C1) à celle de compositions témoin (T1, T2, T3) qui diffèrent de composition conforme à la présente invention en ce qu'elles ne comprennent pas de résine renforçante (résine renforçante + co-agent de la résine renforçante) et/ou de sel d'un métal alcalino-terreux, alcalin ou lanthanide. Leurs formulations (en pce) et leurs propriétés ont été résumées dans le Tableau 1 ci-après.

Les exemples présentés dans le Tableau 2 ont, quant à eux, pour objet de comparer différentes propriétés de compositions conformes à l'invention (C1, C2, C3, C4) par rapport à celles de compositions témoin (T4, T5, T6, T7, T8). Les compositions témoin T4, T5 et T6, diffèrent des compositions conformes à l'invention C1, C3 et C4 respectivement en ce qu'elles ne comprennent pas de sel d'un métal alcalino-terreux, alcalin ou lanthanide. Les compositions témoin T7 et T8 diffèrent de la composition conforme à l'invention C1 en ce qu'elles comprennent moins de 80 pce d'élastomère isoprénique. Leurs formulations (en pce) et leurs propriétés ont été résumées dans le Tableau 2 ci-après.

**Tableau 1**

| | **T1** | **T2** | **T3** | **C1** |
|---|---|---|---|---|
| NR (a) | 100 | 100 | 100 | 100 |
| N347 (b) | 50 | 50 | 50 | 50 |
| Résine renforçante (c) | | | 4 | 4 |
| Durcisseur (d) | | | 0.8 | 0.8 |
| Sel de Mg (e) | | 1.8 | | 1.8 |
| Sel de Co (f) | 1 | 1 | 1 | 1 |
| ZnO (g) | 8 | 8 | 8 | 8 |
| Ac. stéarique (h) | 1 | 1 | 1 | 1 |
| Antioxydant (i) | 2 | 2 | 2 | 2 |
| Soufre | 5.5 | 5.5 | 5.5 | 5.5 |
| Accélérateur (j) | 0.9 | 0.9 | 0.9 | 0.9 |
| **Propriétés** | | | | |
| % augmentation Vp | 210 | 222 | 213 | 135 |

| | | | | |
|---|---|---|---|---|
| (a) Caoutchouc naturel (b) Noir de carbone N347 (dénomination selon la norme ASTM D-1765) (c) Résine formophénolique novolaque (« Peracit 4536K » de la société Perstorp) (d) Hexaméthylènetétramine (de la société Degussa) (e) Acétylacétonate de magnésium « NACEM Magnésium » (CAS 68488-07-3) de la société Niho Kagaku Sangyo (f) Naphténate de cobalt - No. produit 60830 de la société Fluka (g) Oxyde de zinc (grade industriel - société Umicore) (h) Stéarine (« Pristerene 4931 » de la société Uniqema) (i) N-1,3-diméthylbutyl-N-phénylparaphénylènediamine (Santoflex 6-PPD de la société Flexsys) (j) N-ter-butyl-2-benzothiazyle sulfénamide « Santocure TBBS » de la société Flexsys | | | | |

**Tableau 2**

| | **T4** | **C1** | **C2** | **T5** | **C3** | **T6** | **C4** | **T7** | **T8** |
|---|---|---|---|---|---|---|---|---|---|
| NR (a) | 100 | 100 | 100 | 100 | 100 | 100 | 100 | 60 | 40 |
| SBR (k) | | | | | | | | 40 | 60 |
| N347 (b) | 50 | 50 | 50 | | | 40 | 40 | 50 | 50 |
| N550 (l) | | | | 50 | 50 | | | | |
| Silice (m) | | | | | | 10 | 10 | | |
| Résine renforçante (c) | 4 | 4 | 4 | 4 | 4 | 4 | 4 | 4 | 4 |
| Durcisseur (d) | 0.8 | 0.8 | 0.8 | 0.8 | 0.8 | 0.8 | 0.8 | 0.8 | 0.8 |
| Sel de Mg (e) | | 1.8 | 3 | | 1.8 | | 1.8 | 1.8 | 1.8 |
| Sel de Co (f) | 1 | 1 | 1 | 1 | 1 | 1 | 1 | 1 | 1 |
| ZnO (g) | 8 | 8 | 8 | 8 | 8 | 8 | 8 | 8 | 8 |
| Ac. stéarique (h) | 1 | 1 | 1 | 1 | 1 | 1 | 1 | 1 | 1 |
| Antioxydant (i) | 2 | 2 | 2 | 2 | 2 | 2 | 2 | 2 | 2 |
| Soufre | 5.5 | 5.5 | 5.5 | 5.5 | 5.5 | 5.5 | 5.5 | 5.5 | 5.5 |
| Accélérateur (j) | 0.9 | 0.9 | 0.9 | 0.9 | 0.9 | 0.9 | 0.9 | 0.9 | 0.9 |
| **Propriétés à l'initial (après cuisson)** | | | | | | | | | |
| AR% à 100°C | 100 | 107 | 120 | 94 | 106 | 107 | 120 | 63 | 55 |
| Performance hystérétique | 100 | 103 | 101 | 105 | 124 | 113 | 114 | 104 | 108 |
| **Propriétés après vieillissement 7 jours à 77°C** | | | | | | | | | |
| AR% à 100°C | 100 | 113 | 122 | 98 | 119 | 118 | 131 | 67 | 53 |
| Performance hystérétique | 100 | 102 | 101 | 125 | 124 | 112 | 112 | 105 | 107 |
| **Propriétés après vieillissement 14 jours à 77°C** | | | | | | | | | |
| AR% à 100°C | 100 | 117 | 153 | 113 | 124 | 126 | 164 | 86 | 87 |
| Performance hystérétique | 100 | 107 | 100 | 96 | 134 | 108 | 103 | 103 | 100 |

| | | | | | | | | | |
|---|---|---|---|---|---|---|---|---|---|
| (a) à (j) : voir Tableau 1 (k) SBR avec 26% de motif styrène et 24% de motif 1,2 de la partie butadiénique (Tg -48°C) (I) Noir de carbone N347 (dénomination selon la norme ASTM D-1765) (m) Silice « Zeosil 160MP » commercialisée par Rhodia | | | | | | | | | |

Les résultats présentés dans le Tableau 1 montrent que la composition conforme à l'invention permet de réduire l'augmentation de la propagation de fissuration après vieillissement thermo-oxydatif. Ainsi, les pneumatiques dont les couches internes comprennent une composition conforme à l'invention présentent une durée de vie prolongée par rapport à des pneumatiques dont les couches internes comprennent une composition témoin.

Par ailleurs, il est démontré dans le Tableau 2 ci-dessus que les compositions conformes à l'invention permettent d'améliorer la cohésion du mélange (allongement rupture) sans pénalisation de l'hystérèse (voire même en l'améliorant), par rapport à leurs témoins respectifs qui ne comprennent pas de sel d'un métal alcalino-terreux, alcalin ou lanthanide, et ce, même après vieillissement thermo-oxydatif. Les inventeurs ont également constaté que lorsque la matrice élastomérique comprend moins de 80 pce d'élastomère isoprénique, les propriétés mécaniques du mélange ne sont plus satisfaisantes.

## Revendications

1. Pneumatique dont au moins une couche interne comporte une composition de caoutchouc à base d'au moins :
- 80 à 100 pce d'un élastomère isoprénique,
- une charge renforçante comprenant majoritairement du noir de carbone,
- 1 à 45 pce de résine renforçante,
- un sel d'un métal alcalino-terreux, alcalin ou lanthanide,
- un système de réticulation.

2. Pneumatique selon la revendication précédente, dans lequel le noir de carbone présente une surface spécifique BET supérieure ou égale à 15 m²/g, de préférence supérieure ou égale à 50 m²/g.

3. Pneumatique selon l'une quelconque des revendications précédentes, dans lequel la charge renforçante comprend en outre de la silice.

4. Pneumatique selon la revendication 3, dans lequel le ratio du taux de noir de carbone sur le taux de silice dans la composition est compris dans un domaine allant de 2 à 10, de préférence de 3 à 8.

5. Pneumatique selon l'une quelconque des revendications 3 à 4, dans lequel la composition ne comprend pas d'agent de couplage ou en comprend moins de 11%, de préférence moins de 5%, en masse par rapport à la masse de silice.

6. Pneumatique selon l'une quelconque des revendications 1 à 2, dans lequel la charge renforçante comprend exclusivement du noir de carbone.

7. Pneumatique selon l'une quelconque des revendications précédentes, dans lequel le taux total de charge renforçante dans la composition est compris dans un domaine allant de 15 à 150 pce, de préférence de 30 à 80 pce.

8. Pneumatique selon l'une quelconque des revendications précédentes, dans lequel la résine renforçante est choisie dans le groupe constitué par les résines phénoliques, les résines époxydes, les résines benzoxazines, les bismaléimides, les résines polyuréthanes et leurs mélanges.

9. Pneumatique selon l'une quelconque des revendications précédentes, dans lequel la composition comprend en outre un co-agent de la résine renforçante.

10. Pneumatique selon la revendication 9, dans lequel le taux de co-agent de la résine renforçante dans la composition est compris dans un domaine allant de 0,5 à 15 pce, de préférence de de 1 à 10 pce, de préférence encore de 2 à 8 pce.

11. Pneumatique selon l'une quelconque des revendications précédentes, dans lequel le sel d'un métal alcalino-terreux, alcalin ou lanthanide est un acétylacétonate d'un métal alcalino-terreux, alcalin ou lanthanide.

12. Pneumatique selon l'une quelconque des revendications précédentes, dans lequel le métal alcalino-terreux, alcalin ou lanthanide du sel est choisi dans le groupe constitué par le lithium, le sodium, le potassium, le calcium, le magnésium, le lanthane, le cérium, le praséodyme, le néodyme, le samarium, l'erbium et leurs mélanges, et de préférence dans lequel le sel d'un métal alcalino-terreux, alcalin ou lanthanide est un sel de magnésium ou de néodyme, de préférence de magnésium.

13. Pneumatique selon l'une quelconque des revendications précédentes, dans lequel le taux du sel de métal alcalino-terreux, alcalin ou lanthanide dans la composition est compris dans un domaine allant de 0,1 à 5 pce, de préférence de 0,5 à 4 pce.

14. Pneumatique selon l'une quelconque des revendications précédentes, dans lequel le système de réticulation est un système de vulcanisation à base de soufre moléculaire et/ou d'un agent donneur de soufre.

15. Pneumatique selon l'une quelconque des revendications précédentes, dans lequel la couche interne est choisie dans le groupe constitué par les nappes carcasse, les nappes sommet, les bourrages-tringle, les pieds sommets, les couches de découplage, les gommes de bordure, les gommes de bourrage, la sous-couche de bande de roulement et les combinaisons de ces couches internes.

## Patentansprüche

1. Reifen, wobei mindestens eine Innenschicht davon eine Kautschukzusammensetzung auf Basis von mindestens
- 80 bis 100 phe eines Isopren-Elastomers,
- einem verstärkenden Füllstoff, der hauptsächlich Ruß umfasst,
- 1 bis 45 phe verstärkendem Harz,
- einem Salz eines Erdalkali-, Alkali- oder Lanthanidmetalls,
- einem Vernetzungssystem
umfasst.

2. Reifen nach dem vorhergehenden Anspruch, wobei der Ruß eine spezifische BET-Oberfläche größer oder gleich 15 m²/g, bevorzugt größer oder gleich 50 m²/g, aufweist.

3. Reifen nach einem der vorhergehenden Ansprüche, wobei der verstärkende Füllstoff außerdem Kieselsäure umfasst.

4. Reifen nach Anspruch 3, wobei das Verhältnis von Rußgehalt zu Kieselsäuregehalt in der Zusammensetzung in einem Bereich von 2 bis 10, bevorzugt von 3 bis 8, liegt.

5. Reifen nach einem der Ansprüche 3 bis 4, wobei die Zusammensetzung kein Kupplungsmittel umfasst oder weniger als 11 Massen-%, bevorzugt weniger als 5 Massen-%, bezogen auf die Masse von Kieselsäure, davon umfasst.

6. Reifen nach einem der Ansprüche 1 bis 2, wobei der verstärkende Füllstoff ausschließlich Ruß umfasst.

7. Reifen nach einem der vorhergehenden Ansprüche, wobei der Gesamtgehalt von verstärkendem Füllstoff in der Zusammensetzung in einem Bereich von 15 bis 150 phe, bevorzugt von 30 bis 80 phe, liegt.

8. Reifen nach einem der vorhergehenden Ansprüche, wobei das verstärkende Harz aus der Gruppe bestehend aus Phenolharzen, Epoxidharzen, Benzoxazinharzen, Bismaleinimiden, Polyurethanharzen und Mischungen davon ausgewählt ist.

9. Reifen nach einem der vorhergehenden Ansprüche, wobei die Zusammensetzung außerdem ein Coagens des verstärkenden Harzes umfasst.

10. Reifen nach Anspruch 9, wobei der Gehalt von Coagens des verstärkenden Harzes in der Zusammensetzung in einem Bereich von 0,5 bis 15 phe, bevorzugt von 1 bis 10 phe, weiter bevorzugt von 2 bis 8 phe, liegt.

11. Reifen nach einem der vorhergehenden Ansprüche, wobei es sich bei dem Salz eines Erdalkali-, Alkali- oder Lanthanidmetalls um ein Acetylacetonat eines Erdalkali-, Alkali- oder Lanthanidmetalls handelt.

12. Reifen nach einem der vorhergehenden Ansprüche, wobei das Erdalkali-, Alkali- oder Lanthanidmetall des Salzes aus der Gruppe bestehend aus Lithium, Natrium, Kalium, Calcium, Magnesium, Lanthan, Cer, Praseodym, Neodym, Samarium, Erbium und Mischungen davon ausgewählt ist und bevorzugt wobei es sich bei dem Salz eines Erdalkali-, Alkali- oder Lanthanidmetalls um ein Salz von Magnesium oder Neodym, bevorzugt von Magnesium, handelt.

13. Reifen nach einem der vorhergehenden Ansprüche, wobei der Gehalt des Erdalkali-, Alkali- oder Lanthanidmetallsalzes in der Zusammensetzung in einem Bereich von 0,1 bis 5 phe, bevorzugt von 0,5 bis 4 phe, liegt.

14. Reifen nach einem der vorhergehenden Ansprüche, wobei es sich bei dem Vernetzungssystem um ein Vulkanisationssystem auf Basis von molekularem Schwefel und/oder einem Schwefeldonor handelt.

15. Reifen nach einem der vorhergehenden Ansprüche, wobei die Innenschicht aus der Gruppe bestehend aus Karkassenlagen, Zwischenbauten, Kernreitern, Scheitelfüßen, Entkopplungsschichten, Randgummis, Dichtungsgummis, der Unterschicht der Lauffläche und Kombinationen dieser Innenschichten ausgewählt ist.

## Claims

1. Tyre, at least one internal layer of which comprises a rubber composition based on at least:
- 80 to 100 phr of an isoprene elastomer,
- a reinforcing filler predominantly comprising carbon black,
- 1 to 45 phr of reinforcing resin,
- a salt of an alkaline earth, alkali or lanthanide metal,
- a crosslinking system.

2. Tyre according to the preceding claim, in which the carbon black exhibits a BET specific surface of greater than or equal to 15 m²/g, preferably of greater than or equal to 50 m²/g.

3. Tyre according to either one of the preceding claims, in which the reinforcing filler additionally comprises silica.

4. Tyre according to Claim 3, in which the ratio of the content of carbon black to the content of silica in the composition is within a range extending from 2 to 10, preferably from 3 to 8.

5. Tyre according to either one of Claims 3 and 4, in which the composition does not comprise a coupling agent or comprises less than 11%, preferably less than 5%, by weight thereof, with respect to the weight of silica.

6. Tyre according to either one of Claims 1 and 2, in which the reinforcing filler comprises exclusively carbon black.

7. Tyre according to any one of the preceding claims, in which the total content of reinforcing filler in the composition is within a range extending from 15 to 150 phr, preferably from 30 to 80 phr.

8. Tyre according to any one of the preceding claims, in which the reinforcing resin is selected from the group consisting of phenolic resins, epoxy resins, benzoxazine resins, bismaleimides, polyurethane resins and their mixtures.

9. Tyre according to any one of the preceding claims, in which the composition additionally comprises a co-agent of the reinforcing resin.

10. Tyre according to Claim 9, in which the content of co-agent of the reinforcing resin in the composition is within a range extending from 0.5 to 15 phr, preferably from 1 to 10 phr, more preferably from 2 to 8 phr.

11. Tyre according to any one of the preceding claims, in which the salt of an alkaline earth, alkali or lanthanide metal is an acetylacetonate of an alkaline earth, alkali or lanthanide metal.

12. Tyre according to any one of the preceding claims, in which the alkaline earth, alkali or lanthanide metal of the salt is selected from the group consisting of lithium, sodium, potassium, calcium, magnesium, lanthanum, cerium, praseodymium, neodymium, samarium, erbium and their mixtures, and preferably in which the salt of an alkaline earth, alkali or lanthanide metal is a magnesium or neodymium salt, preferably a magnesium salt.

13. Tyre according to any one of the preceding claims, in which the content of the alkaline earth, alkali or lanthanide metal salt in the composition is within a range extending from 0.1 to 5 phr, preferably from 0.5 to 4 phr.

14. Tyre according to any one of the preceding claims, in which the crosslinking system is a vulcanization system based on molecular sulfur and/or on a sulfur-donating agent.

15. Tyre according to any one of the preceding claims, in which the internal layer is selected from the group consisting of carcass plies, crown plies, bead-wire fillings, crown feet, decoupling layers, edge rubbers, padding rubbers, the tread underlayer and the combinations of these internal layers.
